# EUROPEAN PATENT APPLICATION

(11) **EP 4 701 177 A1**
(43) Date of publication of application: **25.02.2026**
(21) Application number: 25196917.6
(22) Date of filing: 20.08.2025
(51) Int. Cl.: H04N 1/00, H04N 1/32

(54) **INFORMATION PROCESSING APPARATUS, METHOD FOR CONTROLLING INFORMATION PROCESSING APPARATUS, PROGRAM, AND STORAGE MEDIUM**

(30) Priority: 21.08.2024 JP 2024139568
(71) Applicant: Canon Kabushiki Kaisha, Tokyo, 146-8501 (JP)
(72) Inventor: KAWAI, Ryoya, Ohta-ku, Tokyo, 146-8501 (JP)
(74) Representative: TBK

(57) **Abstract**

If a printer (102) is not compatible with a printer connect service (103), a usage status display button is hidden to indicate that the printer is not compatible with the printer connect service (103). If the printer (102) is compatible with the printer connect service (103), the usage status display button (521) is in one of three display states, in which the usage status display button (521) is displayed to indicate that the printer (102) is compatible with the printer connect service (103). The three display states correspond to a case where the user is not registered with the printer connect service (103), a case where the user is registered with the printer connect service (103) and logged in to the printer connect service (103), and a case where the user is registered with the printer connect service (103) and not logged in to the printer connect service (103).

## Description

### TECHNICAL FIELD

The present disclosure relates to an information processing technique for controlling a screen display.

### BACKGROUND

Web services (network services) have recently been widely used to provide various functions via a server on a network that can be used by information processing apparatuses such as a smartphone and a PC. There is, for example, a cloud print service in which a print job is registered with a cloud server on a network and the server sends the print job to an electronic device such as a printer. To use this cloud print service, the printer and user information on a user who uses the printer need to be associated and registered with the cloud print service.

Such Web services are not limited to printers, but also provide device-specific services for various electronic devices such as a washing machine, air conditioner, refrigerator, TV, and speaker, which are important services for enhancing the added value of the electronic devices.

Since each Web service is accessible from a plurality of information processing apparatuses such as a smartphone and a PC, it is preferable that a user can properly grasp the usage status of the Web service on each information processing apparatus. Japanese Patent Laid-Open No. 2014-134886 discloses a technique to display an information processing apparatus using a Web service with a shared account on another information processing apparatus in a case where a single Web service is used by a plurality of information processing apparatuses sharing an account.

### SUMMARY

The present disclosure in its first aspect provides an information processing apparatus as specified in claim 1. Optional features are specified in claim 2 to 5.

The present disclosure in its second aspect provides an information processing apparatus as specified in claim 6. Optional features are specified in claim 7 to 16.

The present disclosure in its third aspect provides a control method for an information processing apparatus as specified in claim 17.

The present disclosure in its fourth aspect provides a control method for an information processing apparatus as specified in claim 18.

The present disclosure in its fifth aspect provides a program as specified in claim 19.

The present disclosure in its sixth aspect provides a computer readable storage medium as specified in claim 20.

Features of the present disclosure will become apparent from the following description of embodiments with reference to the attached drawings. The following description of embodiments is described by way of example.

### BRIEF DESCRIPTION OF THE DRAWINGS

Fig. 1 is a conceptual diagram showing an example of a system configuration capable of operating an electronic device using a Web service according to an embodiment of the present disclosure;
Fig. 2 is a diagram showing a hardware configuration example of a client terminal according to the embodiment of the present disclosure;
Fig. 3 is a diagram showing an example of a software configuration implemented by an application executed in the client terminal according to the embodiment of the present disclosure;
Fig. 4 is a diagram showing an example of printer information;
Fig. 5A to 5D are diagrams showing an example of a display screen displayed by an application capable of operating an electronic device according to the embodiment of the present disclosure;
Fig. 6 is a diagram showing a display state of a usage status display button according to the embodiment of the present disclosure;
Fig. 7A to 7G are diagrams showing an example of a display screen displayed by an application capable of operating an electronic device according to the embodiment of the present disclosure;
Fig. 8 is a diagram representing a relationship between Figs. 8A and 8B;
Fig. 8A and 8B are flowcharts for explaining processing for printer and user registration and display control of the usage status display button according to the embodiment of the present disclosure;
Fig. 9A and 9B are diagrams showing an example of a display screen displayed by an application capable of operating an electronic device according to the embodiment of the present disclosure;
Fig. 10 is a diagram representing a relationship between Figs. 10A and 10B;
Fig. 10A and 10B are flowcharts for explaining display control of the usage status display button after the printer and user registration processing according to the embodiment of the present disclosure; and
Fig. 11 is a flowchart for explaining display control of the usage status display button after the printer and user registration processing according to the embodiment of the present disclosure.

### DESCRIPTION OF THE EMBODIMENTS

The above-mentioned Web services may require registration to use various services, in addition to account registration. For example, as for a service that uses an electronic device, an electronic device to be used needs to be registered.

However, in Japanese Patent Laid-Open No.2014-134886, although it is possible to display whether a registered account is in use on another information processing apparatus, a user needs to individually check whether or not various services can be used with that account and a registration status to use the services.

It is therefore an object of the present disclosure to make it easier to grasp registration and usage status of a specific service via a network related to an electronic device in an information processing apparatus for using a communicable electronic device.

Embodiments for implementing the present disclosure will be described below with reference to the drawings. The following embodiments are not intended to limit the present disclosure according to the claims, and not all of the combinations of features described in the present embodiment are necessarily essential to the solution of the present disclosure.

### <1. System Configuration>

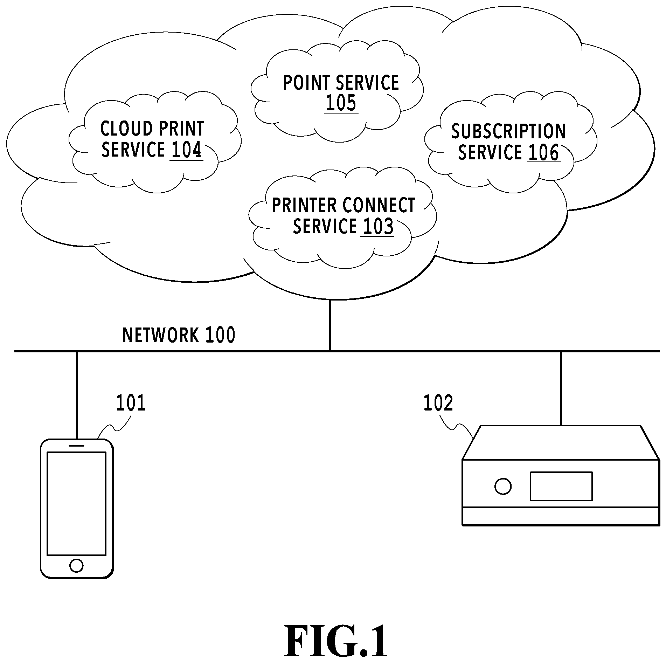

Fig. 1 shows an example of a system configuration capable of operating an electronic device using a Web service according to an embodiment of the present disclosure. The system shown in Fig. 1 includes: a client terminal 101, which is an information processing apparatus such as a smartphone or a PC; a printer 102, which is an electronic device that can be operated from the client terminal 101; and a printer connect service 103 that provides services related to the printer 102. The printer 102 according to the present embodiment is a digital multifunction printer having various functions such as a print function, a copy function, a scan function, and a fax function.

Information about a user of the client terminal 101 (hereinafter referred to as "user information") and information about a printer compatible with the connect service (hereinafter referred to as "printer information") can be registered with the printer connect service 103. The user information and the printer information can be registered individually with the printer connect service 103. However, to complete initial setting for using the printer connect service 103, the user information and the printer information need to be registered in association with each other. Once this initial setting is completed, various Web services can be registered for use, such as a cloud print service 104, a point service 105, and a subscription service 106, via the printer connect service 103.

After the completion of the initial setting, registration with the cloud print service 104 enables safe and reliable printing with the printer 102 via a network 100 from the client terminal 101. Registration with the point service 105 makes it possible to earn points that can be used to purchase consumables such as ink and toner or a new printer by printing with the printer 102 from the client terminal 101. Registration with the subscription service 106 makes it possible to use monthly charging services from the client terminal 101, such as an automatic delivery contract and a maintenance service for consumables such as a printing material such as ink and toner required for printing a certain number of sheets per month, and a printing medium such as printing paper. The printer connect service 103 provides various Web services for allowing safe and comfortable use of the printer 102 from the client terminal 101.

The printer 102 compatible with the connect service sends the printer information to the printer connect service 103 according to an instruction from the client terminal 101. Upon receipt of the printer information from the printer 102, the printer connect service 103 issues a printer ID, which is a unique identifier, to the printer 102. As the client terminal 101 sends the printer information to the printer connect service 103 after the printer ID is issued, the printer connect service 103 sends the printer ID corresponding to the received printer information to the client terminal 101. Upon receipt of the user information from the client terminal 101, the printer connect service 103 issues a token that is information that permits access to the user information only for a specific period of time, as a unique character string for the user information, and sends the token to the client terminal 101. The client terminal 101 stores the printer ID and the token received from the printer connect service 103. As the client terminal 101 then sends the printer ID and the token to the printer connect service 103, the printer connect service 103 stores the printer information and the user information corresponding to the received printer ID and token in association with each other. The registration with the printer connect service 103 is thus completed, and the initial setting for using various services such as the cloud print service 104, the point service 105, and the subscription service 106 is completed via the client terminal 101.

For convenience, Fig. 1 does not show the detailed configuration of the printer connect service 103. However, the printer connect service 103 may be composed of a plurality of services such as an authentication service, an authorization service, and a printer management service. The various Web services such as the cloud print service 104, the point service 105, and the subscription service 106 can cooperate with the authentication service, the authorization service, and the printer management service of the printer connect service 103. This allows the printer connect service 103 to identify the user of the client terminal 101 and the printer 102 and provide the various services. There may also be a plurality of client terminals 101 and a plurality of printers 102.

The information processing apparatus, electronic device, and Web services used in the description of the present embodiment are each an example. The present disclosure is applicable to various information processing apparatuses, electronic devices, and Web services as long as the same system configuration can be implemented. Examples of the electronic device other than the printer include a camera, car, washing machine, air conditioner, refrigerator, TV, speaker, oven, and the like.

The components described above are communicably connected to each other via the predetermined network 100. The type of the network 100 is not particularly limited as long as data can be transmitted and received between the components described above. Specific examples of the network 100 include a LAN connected to the Internet, a WAN, a telephone line, a dedicated digital line, and the like, or a combination thereof.

### <2. Hardware Configuration of Client Terminal>

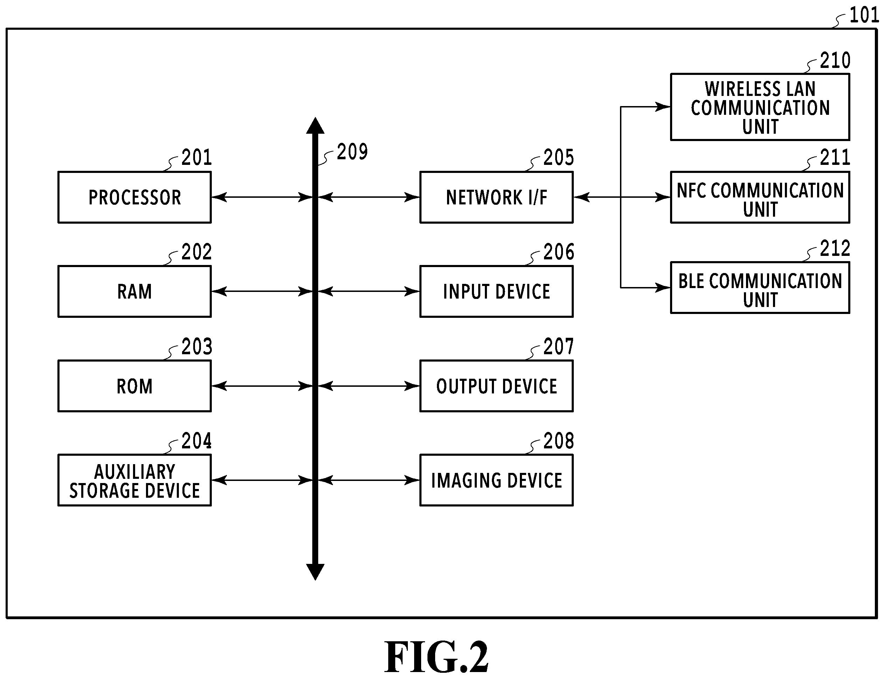

Fig. 2 shows a hardware configuration example of the client terminal 101 according to the embodiment of the present disclosure. The client terminal 101 includes a processor 201, a RAM 202, a ROM 203, an auxiliary storage device 204, a network I/F 205, an input device 206, an output device 207, and an imaging device 208. These components are connected to each other via a bus 209.

The processor 201 is a CPU that controls various operations of the client terminal 101 and is capable of controlling the operations of the entire client terminal 101. The RAM 202 is a main storage device of the processor 201 and is used as a work area of the processor 201 or a temporary storage area for expanding various programs. The ROM 203 stores a program (for example, BIOS) and the like for the processor 201 to control the operations of the client terminal 101. The auxiliary storage device 204 stores programs such as an operating system (OS), which is basic software, and various applications, and various data. The auxiliary storage device 204 is, for example, a non-volatile memory or the like typified by an HDD or SSD. The network I/F 205 is an interface for connecting to a predetermined network (for example, a LAN, a WAN or the like) and communicating with the printer 102 and the printer connect service 103 via the connected network. The network I/F 205 can be connected to a wireless LAN communication unit 210, an NFC (Near Field Communication) communication unit 211, a BLE (Bluetooth Low Energy) communication unit 212, and the like. The input device 206 is a device for receiving user input, for example, a pointing device such as a mouse, an operating device such as a keyboard or a touch panel, and a voice input device such as a microphone. The output device 207 is a device for presenting various information to the user, such as a display device that displays various information. The imaging device 208 is a device that generates an image by converting light captured by an imaging element into an electric signal and converting the electric signal outputted from the imaging element into digital data. The digital data generated by the imaging device 208 is temporarily stored in the RAM 202, and then converted into a predetermined image format by a program executed by the processor 201 and stored in the auxiliary storage device 204 as image data.

The configuration of the client terminal 101 described above is merely an example, and is not limited to the above hardware configuration. As another configuration example of the client terminal 101, some of the plurality of components included in the client terminal 101 described above, for example, the input device 206 or the output device 207, may be externally attached as a separate component from the client terminal 101. The imaging device 208 does not have to be provided.

Functional configurations and processing described below are implemented by the desired client terminal 101 expanding programs stored in the ROM 203 or the auxiliary storage device 204 into the RAM 202 and executing the programs.

### <3. Functional Configuration of Client Terminal>

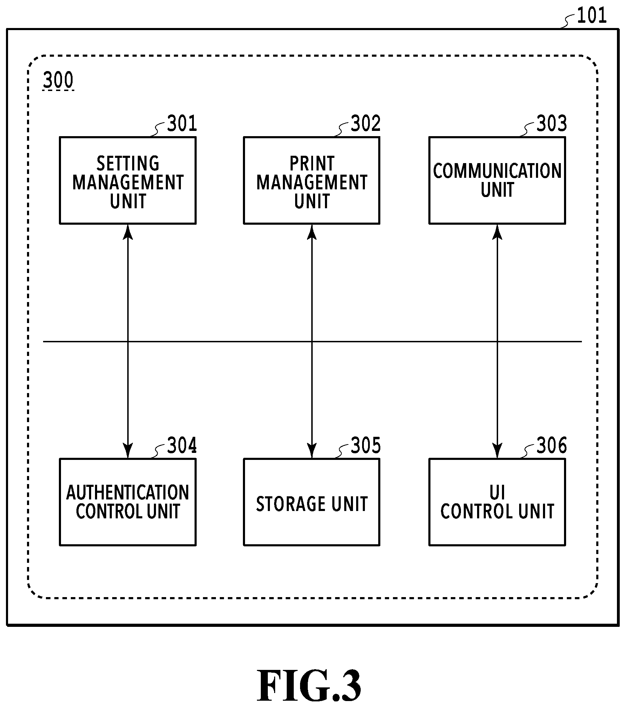

Fig. 3 shows a software configuration example of the client terminal 101 according to the embodiment of the present disclosure. The configuration shown in Fig. 3 is implemented by executing an application 300 in the client terminal 101, and mainly controls the display of the output device 207 of the client terminal 101 in a case of using the printer connect service 103.

The application 300 is a software application capable of operating an electronic device such as the printer 102 run by the processor 201 of the client terminal 101. The application 300 is stored in the ROM 203 or the auxiliary storage device 204, and then expanded in the RAM 202 and executed. The application 300 functions as a setting management unit 301, a print management unit 302, a communication unit 303, an authentication control unit 304, a storage unit 305, and a UI control unit 306.

The setting management unit 301 stores setting information related to various functions of the printer 102 and the application 300 in a predetermined storage area, for example, the RAM 202 or the auxiliary storage device 204 of the client terminal 101, and reads the setting information from the storage area as appropriate. The setting information includes, for example, compatibility information indicating whether the printer 102 is compatible with the printer connect service 103, and the serial number and MAC address of the printer 102. The setting information also includes user information, login information, and the like required to use the printer connect service 103 in the application 300.

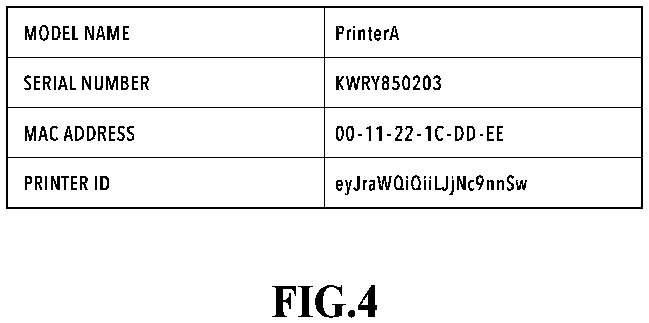

Fig. 4 shows an example of the setting information related to the use of the printer connect service 103. "Model name" is information indicating the name of the printer 102. In the example shown in Fig. 4, "PrinterA" is set as the model name. As for the information set as the model name, an identifier such as a model ID may be set as long as the type of the printer 102 can be specified.

"Serial number" is information for specifying the printer 102. In the example shown in Fig. 4, "KWRY850203" is set as the serial number. As for the information set as the serial number, any format may be used as long as the printer 102 can be specified.

"MAC address" is information for specifying the printer 102 in a second layer of an OSI reference model. In the example shown in Fig. 4, "00-11-22-1C-DD-EE" is set as the MAC address.

"Printer ID" is information for the printer connect service 103 to uniquely specify the printer 102. In the example shown in Fig. 4, "eyJraWQiQiiLJjNc9nSw" is set as the printer ID. The printer ID is information for identifying the printer 102 registered with the printer connect service 103, and is information that can be commonly used in each Web service that can be used via the printer connect service 103. The printer ID is issued by the printer connect service 103.

The print management unit 302 obtains setting information related to the printer 102 from the printer 102. The setting information is stored in a predetermined storage area via the setting management unit 301. The setting information includes, for example, compatibility information indicating whether the printer 102 is compatible with the printer connect service 103. The setting information also includes the serial number and MAC address of the printer 102, as well as print setting information, such as the size of a printing medium, the type of printing medium, margin setting, and double-sided setting, required to execute the print function.

The print management unit 302 manages a print sequence of the print function executed by the application 300. For example, the print management unit 302 generates a print command including the print setting information for executing printing, and sends the generated print command to the printer 102 via the communication unit 303. The print management unit 302 also receives a status response to this print command from the printer 102 via the communication unit 303, and executes processing for the received status response.

The communication unit 303 sends and receives various data to and from other devices such as the printer 102 and the printer connect service 103. For example, the communication unit 303 can send information related to printing to the printer 102 and receive the status response to the print command, the setting information of the printer 102, and the like from the printer 102. The communication unit 303 can also receive various processing requests from the printer connect service 103 and send information according to the processing results to the printer connect service 103.

The authentication control unit 304 executes various processing related to management of the user information related to the user of the printer connect service 103. The authentication control unit 304 receives the user information held by the printer connect service 103 from the printer connect service 103 and stores the user information in a predetermined storage area via the setting management unit 301. The authentication control unit 304 may also perform user authentication processing for using the printer connect service 103. In that case, the authentication control unit 304 may cooperate with an external authentication service to perform the user authentication processing and the user information management. The authentication control unit 304 may also perform processing to send and receive information related to the printer to be registered with the printer connect service 103 to and from the printer connect service 103.

The storage unit 305 stores various data in a predetermined storage area, for example, the RAM 202 or the auxiliary storage device 204 of the client terminal 101, in response to a request or the like from the setting management unit 301.

The UI control unit 306 executes processing to generate and output a UI for receiving user input in the application 300 and presenting various information to the user, in response to requests from other devices. Here, the other devices in the present embodiment are, for example, the printer 102 and the printer connect service 103. The UI control unit 306 also displays the generated UI on the output device 207 of the client terminal 101. A specific example of the UI is a UI for presenting information received from the printer 102 via the communication unit 303, regarding the compatibility with the printer connect service 103. Another example of the UI is a UI for presenting information received from the printer connect service 103 via the communication unit 303, regarding the usage status of the printer connect service 103 by the user. Instead of generating the UI, the UI control unit 306 may receive a screen generated by the printer connect service 103 or data related to output of that screen from the printer connect service 103 via the communication unit 303. The UI control unit 306 can thus present the screen received from outside as a UI to the user of the application 300 via a browser running on the client terminal 101.

### <4. Printer Registration with Application>

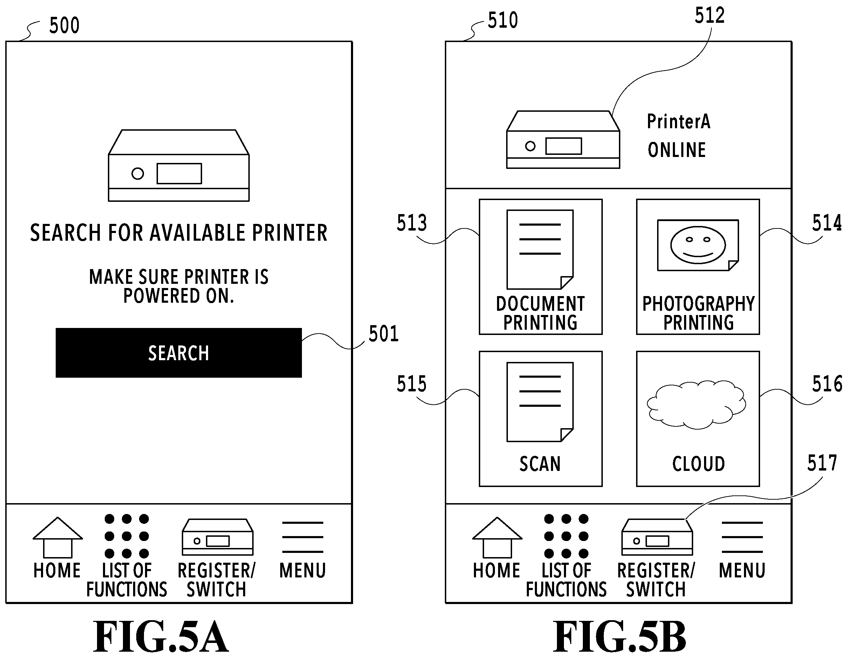

Figs. 5A to 5D show examples of a display screen displayed by the application 300 capable of operating the electronic device according to the embodiment of the present disclosure. Figs. 5A to 5D are schematic diagrams of a screen outputted to the output device 207 by the UI control unit 306 of the application 300.

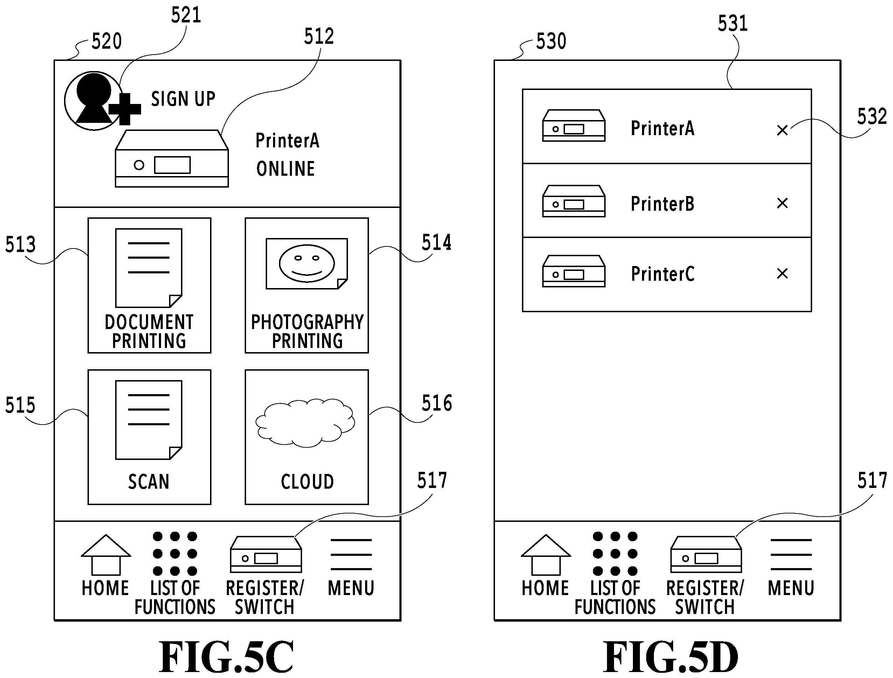

To use the printer connect service 103, the user of the client terminal 101 needs to register the printer 102 with the application 300 running on the client terminal 101. Therefore, once the application 300 is started, if the printer is not registered with the application 300, a registration screen 500 shown in Fig. 5A is displayed on the output device 207, which is a screen for executing processing of registering the printer 102. As a search button 501 displayed in the registration screen 500 is pressed, the application 300 searches for a printer connected to the same network 100 as the client terminal 101. The print management unit 302 obtains printer information from the printer 102 obtained by the search, and stores the obtained printer information in the storage unit 305 of the application 300. The printer information includes information related to printing such as the size of a printing medium that can be used by the printer 102, the type of the printing medium, margin setting, and double-sided setting, as well as information related to the printer 102 such as a serial number, a MAC address, and compatibility information to the printer connect service 103. Once the printer information obtained from the printer 102 is stored in the storage unit 305, the UI control unit 306 of the application 300 displays a first home screen 510 shown in Fig. 5B or a second home screen 520 shown in Fig. 5C. The registration of the printer 102 with the application 300 is thus completed. The first home screen 510 is a home screen displayed by the application 300 in a case where the printer 102 is not compatible with the printer connect service 103. Similarly, the second home screen 520 is a home screen displayed by the application 300 in a case where the printer 102 is compatible with the printer connect service 103.

The second home screen 520 includes a usage status display button 521 indicating the usage status of the printer connect service 103, and a printer button 512 indicating the printer 102 registered with the application 300. The second home screen 520 also includes buttons for executing various functions supported by the registered printer 102. Specifically, the second home screen 520 includes a document printing button 513 for executing a document printing function, a photography printing button 514 for executing a photography printing function, a scan button 515 for executing a scan function, a cloud button 516 for using the cloud print service 104, and the like. The second home screen 520 also includes a registration/switch button 517 for displaying a list of printers registered with the application 300. The first home screen 510 is the same as the second home screen 520 except that the usage status display button 521 is not displayed therein.

As the printer button 512 is pressed, the application 300 displays a printer details screen (not shown) for checking detailed information about the printer 102. The printer details screen displays remaining ink amount information on the printer 102, a utility button for performing maintenance of the printer 102, a manual button for displaying a manual of the printer 102, and the like. As the document printing button 513 or photography printing button 514 is pressed, the application 300 executes a function to print a document or a photograph stored in the client terminal 101 with the printer 102. As the scan button 515 is pressed, the application 300 executes a function to scan a photograph or a document with the printer 102 and store the photograph or document in the client terminal 101.

As the registration/switch button 517 is pressed, the application 300 displays a printer registration switch screen 530 shown in Fig. 5D. The registration switch screen 530 displays a list 531 of printers registered with the application 300, a delete button 532 for deleting the printer registered with the application 300, and the like. The printer list 531 shows Printer A, Printer B, and Printer C, indicating that three printers are registered. As the delete button 532 is pressed, the application 300 deletes the printer registered with the application 300.

The usage status display button 521 indicating the usage status of the printer connect service 103, which is displayed on the second home screen 520 by the application 300, will be described in detail. In a case where the printer 102 registered with the application 300 is compatible with the printer connect service 103, the UI control unit 306 of the application 300 displays the usage status display button 521. The usage status display button 521 shows one of three states: unregistered, registered and logged in, and registered and logged out, depending on the registration status and usage status in the printer connect service 103 by the user of the client terminal 101. In a case where the printer 102 registered with the application 300 is not compatible with the printer connect service 103, the UI control unit 306 of the application 300 hides the usage status display button 521. In other words, the usage status display button 521 can indicate the registration status and usage status of the user of the client terminal 101 in the printer connect service 103, in addition to the compatibility or incompatibility of the printer 102 with the printer connect service 103. The usage status display button 521 is configured such that a symbol displaying the usage status functions as a button, but the symbol displaying the usage status and the button may be configured separately. In such a configuration, it is sufficient that the display of only at least the symbol portion displaying the usage status changes depending on the usage status. Here, the symbol refers to a visual symbol including characters, numbers, graphics or the like used to convey meanings or information.

The second home screen 520 shows a state where the printer 102 compatible with the printer connect service 103 is registered with the application 300, and the user of the client terminal 101 is not registered with the printer connect service 103. In this second home screen 520, the usage status display button 521 is displayed together with a message "sign up" to prompt the user of the client terminal 101 to perform user registration. Therefore, in the state of the second home screen 520, the user cannot yet use the printer connect service 103. For example, if the cloud button 516 is pressed, the application 300 displays a message indicating that registration with the printer connect service 103 is required, resulting in a state where the cloud print service 104 is not available. The first home screen 510 shows a state where the printer 102 not compatible with the printer connect service 103 is registered with the application 300. This first home screen 510 does not display the usage status display button 521 displayed in the second home screen 520.

Here, the compatibility of the printer 102 with the printer connect service 103 is determined based on the compatibility information for the printer connect service 103 obtained from the printer 102 by the print management unit 302 upon registration of the printer 102 with the application 300. If the compatibility information indicates "compatible", the application 300 determines that the printer 102 is compatible with the printer connect service 103, and displays the second home screen 520 on the output device 207. If the compatibility information indicates "incompatible", the application 300 determines that the printer 102 is not compatible with the printer connect service 103, and displays the first home screen 510 on the output device 207.

However, the method of determining the compatibility status of the printer connect service 103 is not limited thereto. For example, the determination may be made based on the model name obtained from the printer 102. In this case, the application 300 sends the model name to the printer connect service 103 and receives the compatibility status of the printer 102 with the printer connect service 103 from the printer connect service 103. Alternatively, the application 300 may hold a list of model names compatible with the printer connect service 103, and determine the compatibility status of the printer 102 with the printer connect service 103 based on the model name of the printer 102. The list of model names may be held in advance by the application 300, or may be held by the printer connect service 103 and obtained at any timing, such as at the time of start-up, from the printer connect service 103 by the application 300.

### <5. Display State of Usage Status Display Button>

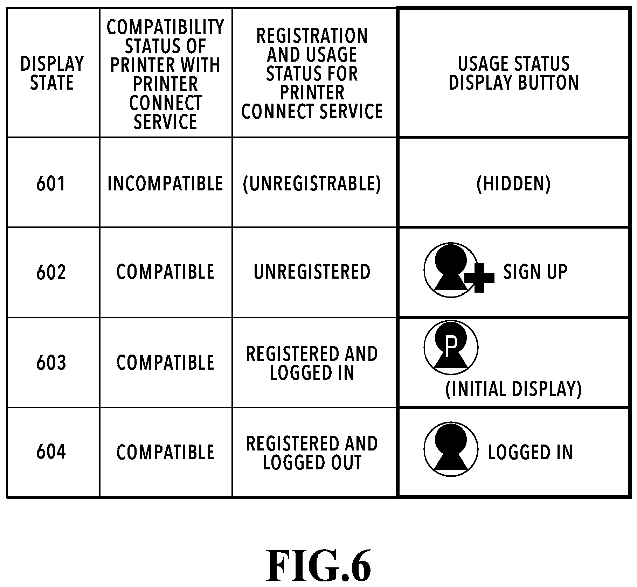

Fig. 6 shows display modes of the usage status display button 521 for each compatibility status of the printer 102 with the printer connect service 103 and for each registration and usage status of the user of the client terminal 101 in the printer connect service 103. Switching between these display modes 601 to 604 is performed based on management information including token information and authentication state information to be described later.

If the printer 102 is not compatible with the printer connect service 103, the usage status display button 521 is in the display state 601. In the display state 601, the usage status display button 521 is hidden to indicate that the printer 102 is not compatible with the printer connect service 103. By hiding buttons related to unavailable services or making the buttons unpressable, the user can be prevented from unnecessarily registering with unavailable services. The first home screen 510 shown in Fig. 5B is an example of a home screen in the display state 601.

Also in a case where a plurality of printers can be registered with the application 300, if all the printers registered with the application 300 are not compatible with the printer connect service 103, the usage status display button 521 is in the display state 601. In a case where no printers are registered with the application 300 and the registration screen 500 shown in Fig. 5A is displayed, again, the usage status display button 521 is in the display state 601. As the display mode 601, instead of hiding the usage status display button 521, the usage status display button 521 may be displayed using a symbol indicating that the registered printer 102 is not compatible with the printer connect service 103. In this case, the usage status display button 521 cannot be pressed, or even if pressed, no processing related to the printer connect service 103 is executed.

If the printer 102 is compatible with the printer connect service 103, the usage status display button 521 is in one of the display states 602 to 604. In the display states 602 to 604, the usage status display button 521 is displayed, indicating that the printer 102 is compatible with the printer connect service 103. This allows the user to recognize that the registration for using the printer connect service 103 is completed. The user can also know the usage status of the printer connect service 103 from each display mode in the display states 602 to 604.

If the user of the client terminal 101 is not registered with the printer connect service 103, that is, if the application 300 does not hold any token information, the usage status display button 521 switches to the display state 602. In this case, the usage status display button 521 includes a user icon, a plus sign illustration, and a "sign up" message, and is displayed to prompt the user of the client terminal 101 to register with the printer connect service 103. The usage status display button 521 in the display state 602, once pressed, operates to execute processing for registering with the printer connect service 103. The usage status display button 521 in the second home screen 520 is in the display state 602.

If the user of the client terminal 101 has already registered with the printer connect service 103 and is currently logged in to the printer connect service 103, the usage status display button 521 switches to the display state 603. That is, if the application 300 holds the token information and the authentication state information indicates "logged in", the usage status display button 521 switches to the display state 603. In this case, the usage status display button 521 includes a user icon and a user's initial, and can indicate to the user of the client terminal 101 that the printer connect service 103 is being used. The usage status display button 521 in the display state 603, once pressed, operates to execute processing of displaying a user information screen.

If the user of the client terminal 101 has already registered with the printer connect service 103 and not yet logged in to the printer connect service 103, the usage status display button 521 switches to the display state 604. That is, if the application 300 holds the token information and the authentication state information indicates "logged out", the usage status display button 521 switches to the display state 604. In this case, the usage status display button 521 includes the user icon and a "log in" message to prompt the user of the client terminal 101 to log in to the printer connect service 103. The usage status display button 521 in the display state 604, once pressed, operates to execute processing for logging in to the printer connect service 103.

In a case where a plurality of printers are registered with the application 300 and one or more of the registered printers are compatible with the printer connect service 103, the usage status display button 521 switches to one of the display states 602 to 604.

The display mode of the usage status display button 521 is thus changed based on the compatibility status of the printer 102 registered with the application 300, with the printer connect service 103 and the registration and usage status of the user in the printer connect service 103. This display mode of the usage status display button 521 allows the user of the client terminal 101 to easily and properly recognize the registration and usage status in the printer connect service 103, thus improving usability.

### <6. Registration with Printer Connect Service>

The registration of user information and printer information with the printer connect service 103 and the display mode of the usage status display button 521 in each registration status according to the present embodiment will be described. Registering the user information and the printer information with the printer connect service 103 in association with each other makes various Web services available, such as the cloud print service 104, the point service 105, and the subscription service 106. The registration of the user information and the printer information with the printer connect service 103 is executed by the application 300 upon registration of the printer 102 with the application 300. Alternatively, the application 300 may execute the registration as the usage status display button 521 is pressed by the user while the usage status display button 521 is in the display state 602 as in the second home screen 520.

The print management unit 302 of the application 300 instructs the printer 102 to communicate with the printer connect service 103, in order to register the printer 102 with the printer connect service 103. Upon receipt of this instruction, the printer 102 sends device identification information including its own serial number and MAC address to the printer connect service 103. The printer connect service 103 assigns a printer ID to the device identification information including the serial number and the MAC address, and stores the serial number, the MAC address, and the assigned printer ID in association with each other. The printer connect service 103 then sends the printer ID to the printer 102. The printer 102 stores the received printer ID in its own device.

Subsequently, the authentication control unit 304 of the application 300 sends the device identification information including the serial number and the MAC address of the printer 102 to the printer connect service 103. The printer connect service 103 sends the printer ID held for the device identification information including the received serial number and MAC address to the application 300. In this event, the serial number and the MAC address sent to the printer connect service 103 by the application 300 are those stored as printer information in the storage unit 305 of the application 300 upon registration of the printer 102 with the application 300.

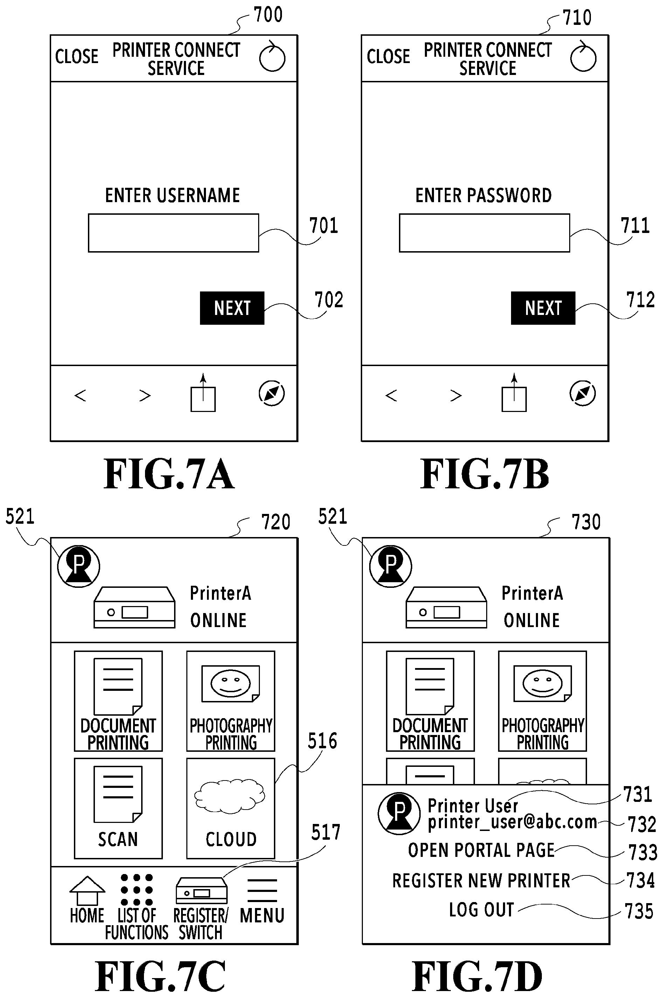

The authentication control unit 304 of the application 300 executes processing for causing the user of the client terminal 101 to input user information, in order to register the received printer ID with the printer connect service 103 in association with the user information. The UI control unit 306 of the application 300 displays a username input screen 700 for inputting a username as shown in Fig. 7A on the output device 207. The username input screen 700 includes a username input region 701 for inputting a username and a Next button 702 for displaying the next screen. As the username is inputted in the username input region 701 and the Next button 702 is pressed, the application 300 displays a password input screen 710 for inputting a password shown in Fig. 7B on the output device 207. The password input screen 710 includes a password input region 711 for inputting a password and a Next button 712 for displaying the next screen. As the password is inputted in the password input region 711 and the Next button 712 is pressed, the application 300 sends the inputted username and password to the printer connect service 103. Upon receipt of the username and the password, the printer connect service 103 creates a user account based on such information and sends token information corresponding to the created user account to the application 300. The token information here is an access token defined in OAuth 2.0, an ID token defined in OpenID Connect, or the like. The access token is a character string indicating information for authorizing access to the user account, and is used by the application 300 to access the user account of the printer connect service 103. The ID token is a character string to prove that the user has been authenticated, and can include information such as the username, email address, and an authentication identifier.

The information to be inputted upon creation of the user account is not limited to the username and the password, but may be an email address, a birthday, or the date of purchase of the printer 102, and a screen for inputting such information may be displayed. This allows necessary user information to be inputted according to the characteristics of a Web service to be provided. The username input screen 700 and the password input screen 710 may be generated by the printer connect service 103 and received by the application 300, and the UI control unit 306 may display the received screens. The username input screen 700 and the password input screen 710 are each an example in the present embodiment, and other methods may be used as long as information for user authentication can be obtained. For example, FIDO authentication using a passkey may also be applied as another user authentication method.

Upon receipt of the printer ID and the token information, the application 300 sends the printer ID and the token information to the printer connect service 103 in association with each other. The token information sent to the printer connect service 103 by the application 300 does not have to be all of the token information, but may be some of the token information, for example, a UUID or the like for uniquely specifying the user account. Upon receipt of the printer ID and the token information, the printer connect service 103 stores the printer ID and the token information in association with each other. The printer 102 and the user of the client terminal 101 are thus associated with each other and registered with the printer connect service 103. The printer connect service 103 sends the result of the registration processing to the application 300. Upon receipt of the result of successful registration, the application 300 stores the token information and the authentication state information indicating "logged in" in the storage unit 305 in association with each other as management information. If the application 300 holds the token information and the authentication state information indicating "logged in", the application 300 determines that the user is registered and logged in to the printer connect service 103. If the application 300 thus determines that the user is registered and logged in, the UI control unit 306 changes the screen displayed on the output device 207 from the second home screen 520 shown in Fig. 5C to a third home screen 720 shown in Fig. 7C. The display of the usage status display button 521 in this third home screen 720 is in the display state 603 shown in Fig. 6. In other words, the UI control unit 306 of the application 300 displays the user icon and the user's initial on the usage status display button 521. With the usage status display button 521 displayed in this display mode, the user of the client terminal 101 can recognize that the user is registered with the printer connect service 103 and is currently using the printer connect service 103.

As the cloud button 516 is pressed, for example, in the third home screen 720, a screen (not shown) of the cloud print service 104 is displayed because the user is registered and logged in to the printer connect service 103. In this event, the application 300 sends the token information held in the storage unit 305 to the cloud print service 104, thereby making the cloud print service 104 available for the user registered and logged in to the printer connect service 103.

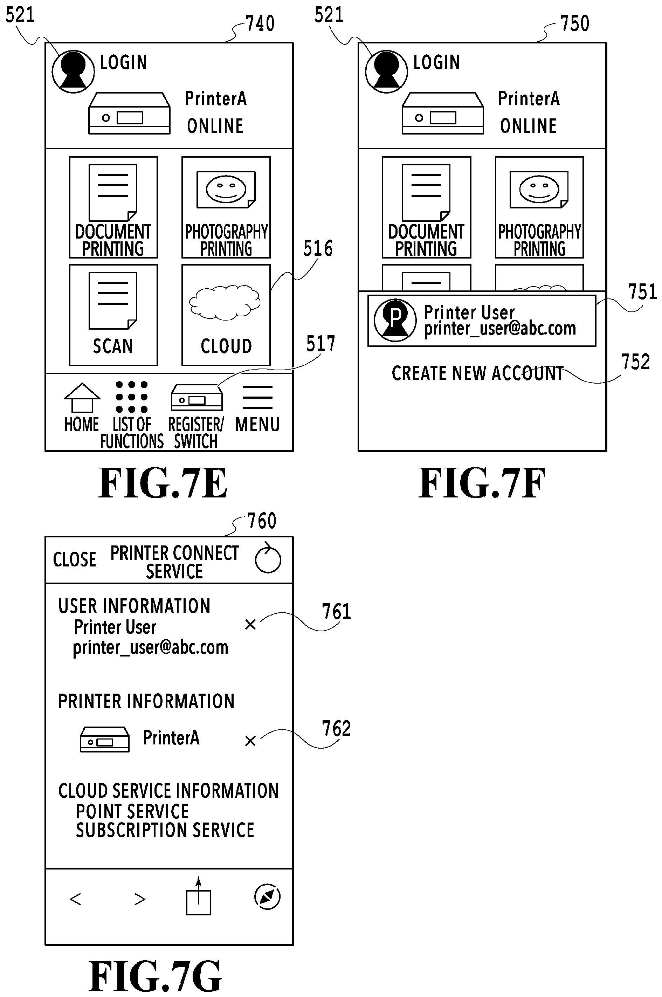

As the usage status display button 521 is pressed in the third home screen 720, the application 300 displays a user information screen 730 shown in Fig. 7D. The user information screen 730 displays a username 731 and an email address 732 of the user registered and logged in, as well as a user portal button 733 for displaying a user portal screen 760 shown in Fig. 7G. The user information screen 730 also includes a printer registration button 734 for registering a new printer with the printer connect service 103, and a logout button 735 for logging out of the printer connect service 103. As the user portal button 733 is pressed, the application 300 displays the user portal screen 760 provided by the printer connect service 103. The application 300 sends the token information held in the storage unit 305 to the user portal, thereby also making the user portal screen 760 available for the user registered and logged in.

The user portal screen 760 displays user information such as the username and email address registered with the printer connect service 103, and printer information held in association with the user information. The user portal screen 760 also displays information for checking detailed usage of the point service 105 and the subscription service 106. The user of the client terminal 101 can use the user portal screen 760 to check the user information and the printer information registered with the printer connect service 103.

The user of the client terminal 101 can change or delete the registered user information and also delete the registered printer via the user portal screen 760. Specifically, as a user information delete button 761 is pressed, the printer connect service 103 deletes all of the user information on the logged-in user and the printer information associated with that user information. In the user portal screen 760 shown in Fig. 7, the Printer User account in the user information is deleted. As a printer information delete button 762 is pressed, the printer information associated with the user is deleted. As the printer information delete button 762 is pressed in the user portal screen 760 shown in Fig. 7, the Printer User account with PrinterA registered as the user information is deleted.

As the printer registration button 734 is pressed in the user information screen 730, the application 300 displays a printer list screen (not shown) as a list of printers compatible with the printer connect service 103 registered with the application 300. As a printer to be newly registered with the printer connect service 103 is selected from the printer list screen, the application 300 registers the selected printer with the printer connect service 103.

As the logout button 735 is pressed in the user information screen 730, the application 300 changes the authentication state information stored in the storage unit 305 by the setting management unit 301 to "logged out", resulting in a registered and logged out state. In other words, the application 300 switches between the registered and logged in state and the registered and logged out state, based on the value of the authentication state information held in the storage unit 305.

As the application 300 switches to the registered and logged out state, the application 300 causes the UI control unit 306 to display a fourth home screen 740 shown in Fig. 7E on the output device 207. The display of the usage status display button 521 in the fourth home screen 740 is in the display state 604 shown in Fig. 6. That is, the UI control unit 306 of the application 300 displays the user icon on the usage status display button 521 and the message "log in". This allows the user of the client terminal 101 to recognize that the user is registered with the printer connect service 103 but is not using the printer connect service 103.

As the cloud button 516 is pressed, for example, in the fourth home screen 740, a message is displayed indicating that the user needs to log in to the printer connect service 103. This is because the user is not using the printer connect service 103 and therefore cannot use the cloud print service 104 either.

As the usage status display button 521 is pressed in the fourth home screen 740, the application 300 displays an account selection screen 750 shown in Fig. 7F to prompt the user to log in to the printer connect service 103. The account selection screen 750 also includes a user account button 751 for a user who can log in and a new account creation button 752 for creating a new user account, based on the token information held in the storage unit 305 of the application 300.

As the user account button 751 is pressed in the account selection screen 750, the application 300 checks with the printer connect service 103 whether the token information held in the storage unit 305 is valid. If the token information has expired, the application 300 causes the UI control unit 306 to display the username input screen 700 and the password input screen 710 on the output device 207, and causes the authentication control unit 304 to perform user authentication processing again. If the token information held in the storage unit 305 has not expired, the application 300 logs in to the printer connect service 103 based on the username input screen 700 and the password input screen 710. After logging in to the printer connect service 103, the application 300 obtains token information with a new expiration date set from the printer connect service 103, and updates the authentication state information held in the storage unit 305 to "logged in". Based on the authentication state information held in the storage unit 305 and the updated token information, the application 300 displays the third home screen 720 and switches the usage status display button 521 to the display state 603. In other words, the UI control unit 306 of the application 300 displays the user icon and the user's initial on the usage status display button 521. This allows the user of the client terminal 101 to recognize that the user is registered with and is now using the printer connect service 103.

When the new account creation button 752 is pressed in the account selection screen 750, the application 300 displays the username input screen 700 and the password input screen 710 on the output device 207. This leads to execution of the same processing as in the case where the user information is registered with the printer connect service 103 in the second home screen 520. Upon completion of the processing, the application 300 switches to a registered and logged-in state and displays the third home screen 720. The display of the usage status display button 521 switches to the display state 603 shown in Fig. 6. That is, the UI control unit 306 of the application 300 displays the user icon and the user's initial on the usage status display button 521. This display enables the user of the client terminal 101 to recognize that the user is registered with the printer connect service 103 and is now using the printer connect service 103.

### <7. Processing Flow of Registration with Printer Connect Service and Display Control of Usage Status Display Button>

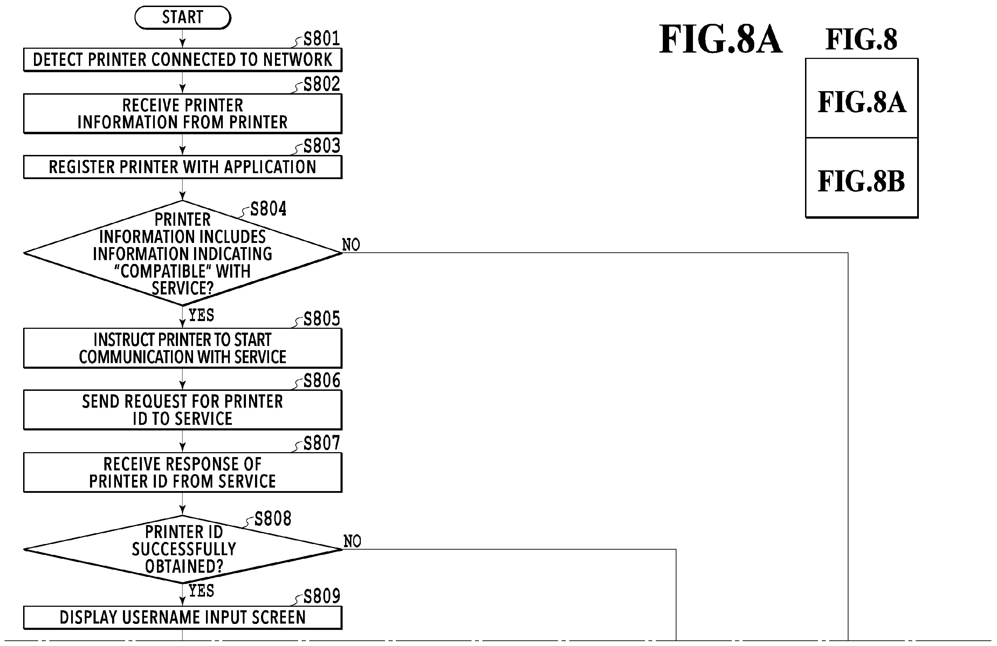

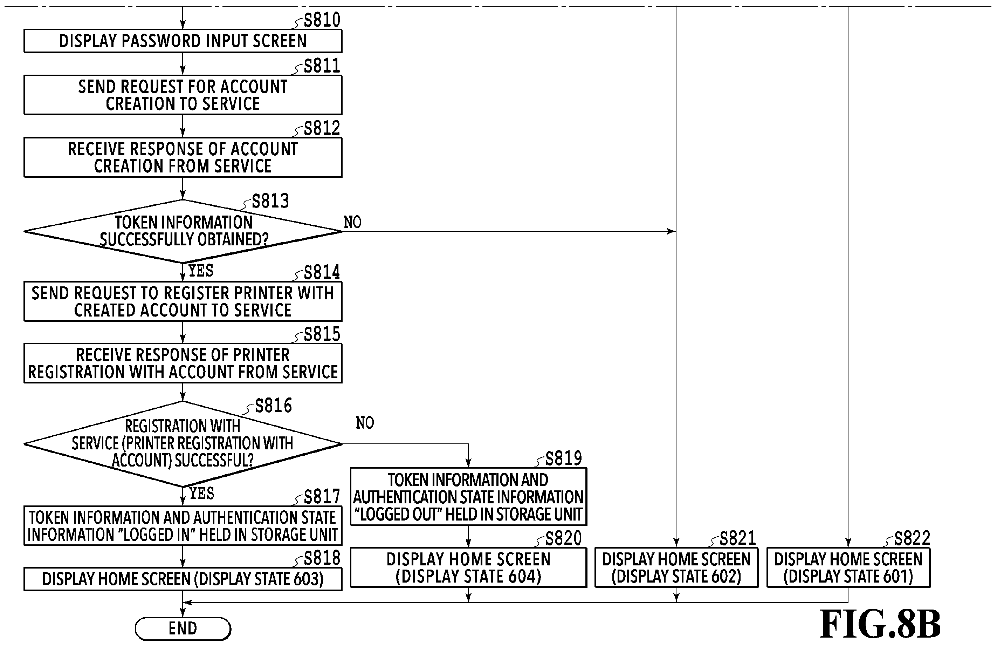

Next, description will be given of a processing flow of registration with the printer connect service 103 executed by the application 300 in a case of registering the printer 102 with the application 300 according to the present embodiment. Fig. 8 shows a flowchart for explaining processing related to printer and user registration and display control of the usage status display button according to the present embodiment. This processing is executed by the application 300 as a search button 501 is pressed in the registration screen 500 of the application 300 in a state where the printer 102 is connected to the network 100. Each processing in this flowchart is implemented by the processor 201 of the client terminal 101 expanding a program stored in the ROM 203 or the auxiliary storage device 204 into the RAM 202 and executing the program.

In S801, the processor 201 detects the printer 102 connected to the network 100 to which the client terminal 101 is connected.

In S802, the processor 201 receives printer information from the detected printer 102. The printer information includes information about printing, such as the size of a printing medium that can be used by the printer 102, the type of the printing medium, margin setting, and double-sided setting, as well as information about the printer, such as the serial number and MAC address of the printer 102, and its compatibility information with the printer connect service 103.

In S803, upon receipt of the printer information, the processor 201 registers the printer 102 with the application 300.

In S804, the processor 201 checks whether the printer information received in S802 includes the compatibility information with the printer connect service 103. If it is determined that the printer information does not include the information indicating the compatibility with the printer connect service 103 and that the detected printer 102 is not compatible with the printer connect service 103, the processing proceeds to S822, or otherwise proceeds to S805.

In S822, the processor 201 displays the first home screen 510 with the usage status display button 521 in the display state 601, and ends the processing. In this case, the application 300 does not display the usage status display button 521, indicating that the printer connect service 103 is not available.

In S805, the processor 201 instructs the printer 102 to start communication with the printer connect service 103. Upon receipt of this instruction, the printer 102 sends its own serial number and MAC address to the printer connect service 103. The printer connect service 103 generates and stores a printer ID that is unique to the combination of the received serial number and MAC address. The printer connect service 103 sends the generated printer ID to the printer 102. The printer 102 stores the printer ID received from the printer connect service 103. This processing allows the printer connect service 103 to recognize the presence of the printer 102.

In S806, the processor 201 sends a request for the printer ID corresponding to the printer 102 registered with the application 300 to the printer connect service 103. This request includes the serial number and MAC address of the printer 102 as printer information. Upon receipt of the serial number and MAC address of the printer 102 from the application 300, the printer connect service 103 specifies the printer ID corresponding to the combination of the received serial number and MAC address. If the corresponding printer ID is specified, the printer connect service 103 sends a response including the specified printer ID to the application 300.

In S807, the processor 201 receives the response from the printer connect service 103 to the request for the printer ID.

In S808, the processor 201 checks whether the response received from the printer connect service 103 includes the printer ID and whether the printer ID is obtained. If the printer ID is not obtained, the processor 201 determines that the registration processing of the printer 102 with the printer connect service 103 has failed and proceeds to S821, or otherwise proceeds to S809.

In S821, the processor 201 displays the second home screen 520 with the usage status display button 521 in the display state 602, and ends the processing. In this event, the processor 201 may display on the output device 207 an error screen indicating that the registration processing of the printer 102 with the printer connect service 103 did not end normally. As the usage status display button 521 is pressed in the second home screen 520, the processor 201 executes the registration processing of the printer 102 with the printer connect service 103. In other words, the processor 201 executes the processing of S805 again. Therefore, the user of the client terminal 101 can execute the registration processing of the printer 102 with the printer connect service 103 again by pressing the usage status display button 521 in the second home screen 520.

In S809, the processor 201 displays the username input screen 700 on the output device 207. As a username is inputted in the username input screen 700 and the processor 201 receives an instruction to display the next screen, the processor 201 proceeds to S810.

In S810, the processor 201 displays the password input screen 710 on the output device 207. As a password is inputted and the processor 201 receives an instruction to display the next screen, the processor 201 proceeds to S811.

In S811, the processor 201 sends an account creation request to the printer connect service 103. The sent request includes the inputted authentication information, that is, the username and the password. In this event, as two-factor authentication, ownership authentication using a one-time password or biometric authentication using a face, fingerprint, vein or the like may be performed. Alternatively, FIDO authentication using a passkey may be used instead of authentication using a username and a password. The processor 201 may also display a screen for inputting the email address and date of birth of the user of the client terminal 101, in addition to the username and password.

In response to the account creation request in S811, the printer connect service 103 creates an account for the corresponding user. Once the account is created, the printer connect service 103 sends a response including token information corresponding to the created account to the application 300.

In S812, the processor 201 receives the response from the printer connect service 103 to the account creation request.

In S813, the processor 201 checks whether the response received from the printer connect service 103 includes the token information and the token information is obtained. If the token information is not obtained, the processor 201 determines that the account creation processing has failed and proceeds to S821 described above, or otherwise proceeds to S814. In a case of moving from S813 to execute S821, the processor 201 may display on the output device 207 an error screen indicating that account creation for the printer connect service 103 has failed.

In S814, the processor 201 sends a request to the printer connect service 103 to register the printer 102 in association with the account corresponding to the token information. This request includes the printer ID and token information. Upon receipt of the request to register the printer, the printer connect service 103 registers the printer ID with the account corresponding to the received token information. Accordingly, the printer ID and the account are associated in the printer connect service 103, and the printer 102 is registered with the account corresponding to the token information. Upon completion of the printer ID registration with the account, the printer connect service 103 sends a response including registration completion information to the application 300.

In S815, the processor 201 receives the response sent by the printer connect service 103.

In S816, the processor 201 checks whether the response received from the printer connect service 103 includes the registration completion information and the printer 102 is successfully registered with the account. If the registration completion information is not included, the processor 201 determines that the registration processing of the printer 102 with the account has failed and proceeds to S819, or otherwise proceeds to S817.

In S819, the processor 201 stores the token information and authentication state information indicating "logged out" in the storage unit 305. In this event, the application 300 has succeeded in creating an account for the user of the client terminal 101, but has failed to register the printer 102 with that account, resulting in a state where the printer connect service 103 is not available.

In S820, the processor 201 displays the fourth home screen 740 with the usage status display button 521 in the display state 604, and ends the processing. In this event, the processor 201 may display an error screen on the output device 207, indicating that the registration processing of the printer 102 with the account of the user of the client terminal 101 did not end normally. As the usage status display button 521 is pressed in the fourth home screen 740, the processor 201 executes the registration processing of the printer 102 with the printer connect service 103. In other words, the processor 201 executes the processing of S805 again. Therefore, the user of the client terminal 101 can execute the registration processing of the printer 102 with the printer connect service 103 again by pressing the usage status display button 521 in the fourth home screen 740.

In S817, the processor 201 stores the token information and the authentication state information indicating "logged in" in the storage unit 305. In this event, the application 300 has successfully completed the registration of the user of the client terminal 101 with the printer connect service 103, resulting in a state where the printer connect service 103 is available.

In S818, the processor 201 displays the third home screen 720 with the usage status display button 521 displayed in the display state 603 on the output device 207, and ends the processing. In this event, the processor 201 may display, on the output device 207, a screen indicating that the registration processing of the user of the client terminal 101 with the printer connect service 103 is successfully completed.

Upon registration with the printer connect service 103, all of the processing shown in Fig. 8 does not have to be always executed. For example, if there is no printer to be newly registered with the printer connect service 103 by the processor 201, S805 to S808 may be omitted. In a case where the application 300 holds in advance valid token information corresponding to the account to be logged in, S809 to S813 may be omitted. This is effective in a case where the usage status display button 521 in the display state 604 is pressed, or the like.

The processing shown in Fig. 8 does not necessarily have to start from S801, and necessary processing may be executed as appropriate. For example, if the usage status display button 521 in the display state 602 is pressed in the second home screen 520, the processing may be executed from S805. The processing may be executed from S805 as the new printer registration button 734 is pressed in the user information screen 730 and the printer 102 to be registered is selected. Similarly, the processing may also be executed from S805 as the account to be logged in is selected in the account selection screen 750. The processing shown in Fig. 8 can be executed from any step as necessary, as long as the printer 102 registered with the application 300 can be registered with the printer connect service 103.

In the processing shown in Fig. 8, the processor 201 may change some of the processing contents as long as the display state and operation state of the usage status display button 521 can be appropriately controlled. For example, the compatibility status of the printer 102 with the printer connect service 103 does not necessarily have to be received from the printer, and the same information may be received from the printer connect service 103.

Through such a series of processing flow, the printer 102 registered with the application 300 can be registered with the printer connect service 103. The display mode of the usage status display button 521 can be switched depending on whether the registration processing with the printer connect service 103 is successful or unsuccessful. The user of the client terminal 101 can recognize the registration and usage status of the printer connect service 103 from the usage status display button 521, thus improving usability.

### <8. Deletion of Registered Information>

The printer information registered with the application 300 and the printer information and user information registered with the printer connect service 103 can be deleted and deregistered at any time. For example, the printer 102 registered with the application 300 can be deleted from the application 300 in a printer registration switch screen 530. The printer registration switch screen 530 is displayed as the registration/switch button 517 included in the first home screen 510 or the second home screen 520 of the application 300 is pressed. The printer 102 registered with the printer connect service 103 can be deleted from the printer connect service 103 in the user portal screen 760 opened in another application such as a Web browser. Similarly, the user information registered with the printer connect service 103 can also be deleted through the user portal screen 760.

The screen display of the application 300 in a case where information required to use the printer connect service 103 is deleted in each of display states 602 to 604 shown in Fig. 6 will be described mainly with reference to Fig. 5C, Fig. 6, Figs. 7C to 7E, and Figs. 9A and 9B.

First, description will be given of the screen display of the application 300 in a case where the printer information of the printer 102 compatible with the printer connect service 103 registered with the application 300 is deleted in the display state 602.

In the display state 602, the printer 102 compatible with the printer connect service 103 is registered with the application 300, but the printer 102 is not registered with the printer connect service 103. That is, the application 300 displays the second home screen 520 shown in Fig. 5C. If all printers compatible with the printer connect service 103 are deleted from the application 300 in the display state 602, no printers compatible with the printer connect service 103 are registered with the application 300. Therefore, the application 300 changes to the state described in the display state 601. That is, the application 300 hides the usage status display button 521. In this event, if no printers are registered with the application 300, the application 300 displays the registration screen 500. On the other hand, if only printers not compatible with the printer connect service 103 are registered with the application 300, the application 300 displays the first home screen 510.

In the display state 602, no user account is created for the printer connect service 103, and user information and printer information are not registered. Therefore, there is no case of deleting user information and printer information registered with the printer connect service 103.

Next, description will be given of the screen display of the application 300 in a case where the printer information of the printer 102 compatible with the printer connect service 103 registered with the application 300 is deleted in the display state 603 shown in Fig. 6.

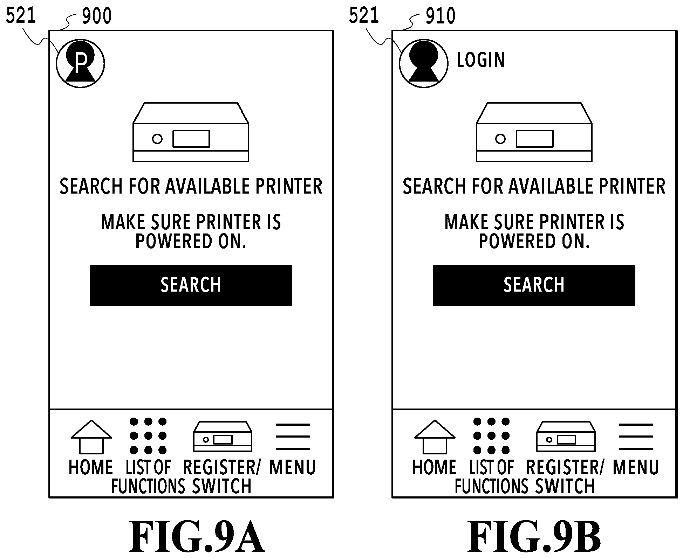

In the display state 603, a printer compatible with the printer connect service 103 is registered with the application 300, and the printer is registered and logged in to the printer connect service 103. In other words, the application 300 displays the third home screen 720 shown in Fig. 7C. If all printers compatible with the printer connect service 103 are deleted from the application 300 in the display state 603, no printers compatible with the printer connect service 103 are registered with the application 300. On the other hand, the application 300 keeps holding the token information corresponding to the user account currently logged in to the printer connect service 103 and the authentication state information indicating "logged in". Therefore, the application 300 maintains the registered and logged-in state and remains in the display state 603. That is, the UI control unit 306 of the application 300 keeps the user icon and the user's initial displayed on the usage status display button 521. Therefore, the screen displayed by the application 300 is either a registration screen 900 shown in Fig. 9A or the third home screen 720 shown in Fig. 7C. If no printer is registered with the application 300, the registration screen 900 is displayed. If only printers that are not compatible with the printer connect service 103 are registered with the application 300, the third home screen 720 is displayed. The registration screen 900 is a screen obtained by adding the usage status display button 521 in the display state 603 to the registration screen 500. An operation in a case of pressing the usage status display button 521 in the registration screen 900 is the same as the operation in the case of pressing the usage status display button 521 in the third home screen 720.

Accordingly, even if the user of the client terminal 101 deletes the printer 102 registered with the application 300, the user can display the user information screen 730 or the user portal screen 760 by pressing the usage status display button 521. The display of the usage status display button 521 may indicate that no printers compatible with the printer connect service 103 are registered with the application 300, in addition to indicating that the user is registered and logged in.

Next, description will be given of the screen display of the application 300 in a case where the printer information registered with the printer connect service 103 is deleted in the display state 603. If the printer information registered with the printer connect service 103 is deleted, the association between the user information and the printer information in the printer connect service 103 is deleted. To control the display state of the usage status display button 521, the application 300 communicates with the printer connect service 103 via the communication unit 303 at any timing, such as at the time of start-up, and checks the registration status of the printer connect service 103. In this event, the application 300 can check the registration status in the printer connect service 103 by sending the token information held in the storage unit 305 to the printer connect service 103. If the result of checking the registration status shows that the printer information associated with the user information of the user of the client terminal 101 is not registered with the printer connect service 103, the application 300 changes the authentication state information held in the storage unit 305 to "logged out". Accordingly, the application 300 switches to a registered and logged-out state. Specifically, the UI control unit 306 of the application 300 displays the fourth home screen 740, and the usage status display button 521 is set to the display state 604. With the usage status display button 521 displayed in the display state 604, the user of the client terminal 101 can easily log in again to the printer connect service 103 from the account selection screen 750. To log in again, the user registers the printer 102 compatible with the printer connect service 103, which is registered with the application 300, with the printer connect service 103. Accordingly, the user information of the user of the client terminal 101 can be associated with the printer information of the printer 102, and the printer information is held again in the printer connect service 103. At the same time as the registration of the printer 102 with the printer connect service 103, the application 300 changes the authentication state information held in the storage unit 305 to "logged in" and switches the usage status display button 521 to the display state 603.

Next, description will be given of the screen display of the application 300 in a case where the user information registered with the printer connect service 103 is deleted in the display state 603. If the user information registered with the printer connect service 103 is deleted, the user account in the printer connect service 103 is deleted. To control the display state of the usage status display button 521, the application 300 communicates with the printer connect service 103 via the communication unit 303 at any timing, such as at the time of start-up, and checks the registration status with the printer connect service 103. In this event, the application 300 can check the registration status of the user of the client terminal 101 with the printer connect service 103 by sending the token information held in the storage unit 305 to the printer connect service 103. If the result of checking the registration status shows that no user account exists in the printer connect service 103 for the user of the client terminal 101, the application 300 deletes the token information held in the storage unit 305 and the authentication state information indicating "logged in". This leads to a state where the application 300 is unregistered with the printer connect service 103. Specifically, the application 300 displays the second home screen 520 and sets the usage status display button 521 to the display state 602. With the usage status display button 521 set to the display state 602, the user of the client terminal 101 can re-register with the printer connect service 103 via the username input screen 700 and the password input screen 710. To re-register, the application 300 registers the printer 102 compatible with the printer connect service 103, which is registered with the application 300, with the printer connect service 103. Accordingly, the user information of the user of the client terminal 101 and the printer information of the printer 102 are registered with the printer connect service 103 in association with each other. At the same time, the application 300 stores in the storage unit 305 the token information obtained during the re-registration with the printer connect service 103 and the authentication state information indicating "logged in", and sets the usage status display button 521 to the display state 603.

Next, description will be given of the screen display of the application 300 in a case where the printer 102 compatible with the printer connect service 103 registered with the application 300 is deleted in the display state 604 shown in Fig. 6.

In the display state 604, a printer compatible with the printer connect service 103 is registered with the application 300, and the user is registered with and logged out of the printer connect service 103. In other words, the application 300 displays the fourth home screen 740 shown in Fig. 7E. If all printers compatible with the printer connect service 103 are deleted from the application 300 in the display state 604, no printers compatible with the printer connect service 103 are registered with the application 300. On the other hand, since the application 300 still holds the token information corresponding to the user account currently logged in to the printer connect service 103, the application 300 maintains the registered and logged-out state, and remains in the display state 604. Specifically, the UI control unit 306 of the application 300 keeps displaying the user icon and the message prompting login on the usage status display button 521. Therefore, the screen displayed by the application 300 is either a registration screen 910 shown in Fig. 9B or the fourth home screen 740 shown in Fig. 7E. If no printers are registered with the application 300, the registration screen 910 is displayed. On the other hand, if only printers that are not compatible with the printer connect service 103 are registered with the application 300, the fourth home screen 740 is displayed. The registration screen 910 is a screen obtained by adding the usage status display button 521 in the display state 604 to the registration screen 500. An operation in a case of pressing the usage status display button 521 in the registration screen 910 is the same as the operation in the case of pressing the usage status display button 521 in the fourth home screen 740. The display of the usage status display button 521 may indicate that no printers 102 compatible with the printer connect service 103 are registered with the application 300, in addition to indicating that the user is registered and logged out.

In this case, since no printers compatible with the printer connect service 103 are registered with the application 300, no printer can be registered with the printer connect service 103. In other words, the user of the client terminal 101 cannot log back in to the printer connect service 103 via the account selection screen 750. Therefore, if the user account button 751 is pressed in the display state 604, the application 300 displays a registration error screen (not shown). This registration error screen displays a printer registration button for executing registration of a printer with the application 300 and a user portal button for opening the user portal screen 760. As the printer registration button is pressed, the application 300 executes printer registration processing with the application 300. Once the printer 102 compatible with the printer connect service 103 is registered with the application 300, the application 300 registers the printer 102 with the printer connect service 103. Accordingly, even if the user of the client terminal 101 deletes the printer 102 registered with the application 300, the user can register the printer 102 with the printer connect service 103 by pressing the usage status display button 521. As a result, the application 300 can store the token information corresponding to the user of the client terminal 101 and authentication state information indicating "logged in" in the storage unit 305, and set the usage status display button 521 to the display state 603. An operation in a case of pressing the user portal button is the same as the operation in the case of pressing the user portal button 733 in the user information screen 730. The user of the client terminal 101 can check their own user account information in the user portal screen 760.

The screen display by the application 300 in a case where the printer information registered with the printer connect service 103 is deleted in the display state 604 is the same as in the case where the printer information registered with the printer connect service 103 is deleted in the display state 603. However, since the storage unit 305 of the application 300 has already changed the authentication state information to "logged out", the application 300 simply maintains the registered and logged-out state. In other words, the application 300 keeps the fourth home screen 740 displayed, and the usage status display button 521 also remains in the display state 604.

The screen display by the application 300 in a case where the user information registered with the printer connect service 103 is deleted in the display state 604 is the same as in the case where the user information registered with the printer connect service 103 is deleted in the display state 603.

Accordingly, even if the printer information registered with the application 300 as well as the printer information and user information registered with the printer connect service 103 are deleted, the application 300 appropriately controls the display state and operation state of the usage status display button 521. This makes it possible for the user of the client terminal 101 to easily and properly recognize the registration and usage status of the user with the printer connect service 103, thus improving usability.

### <9. Processing Flow of Display Control of Usage Status Display Button After Registration with Printer Connect Service>

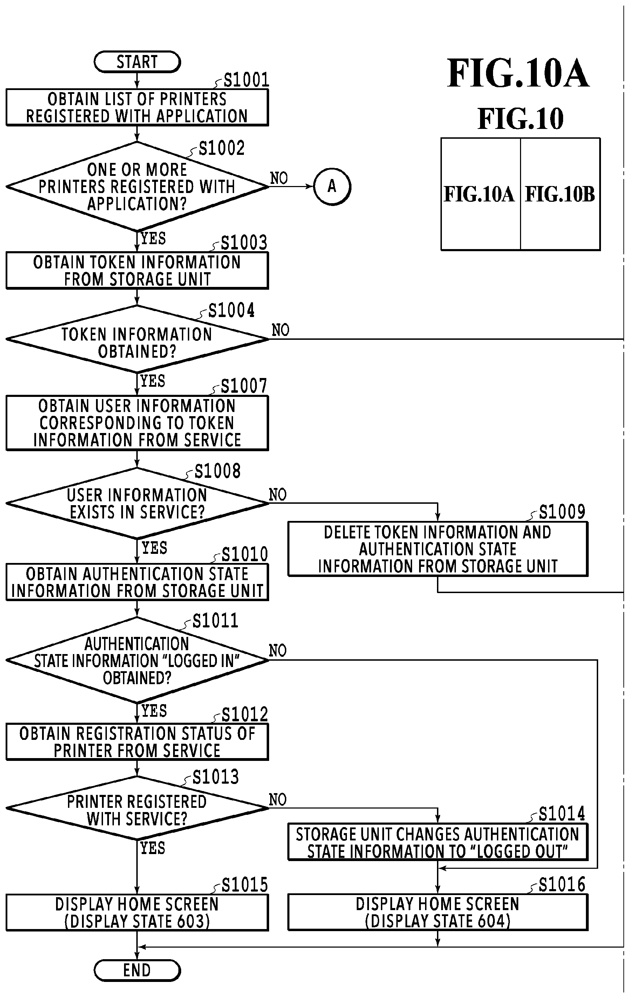

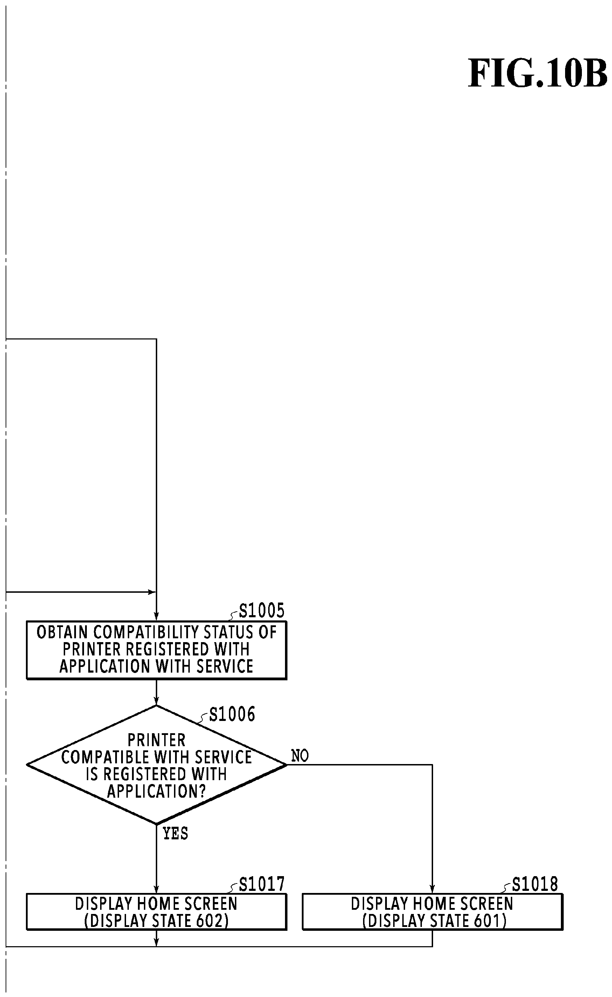

Fig. 10 shows a flowchart for explaining processing related to display control of the usage status display button 521 after the printer and user registration according to the present embodiment. The processing shown in Fig. 10 is mainly executed by the application 300 upon start-up of the application 300 after the execution of the processing flow shown in Fig. 8. Each processing in this flowchart is implemented by the processor 201 of the client terminal 101 expanding a program stored in the ROM 203 or the auxiliary storage device 204 into the RAM 202 and executing the program.

In S1001, the processor 201 obtains a list of printers registered with the application 300.

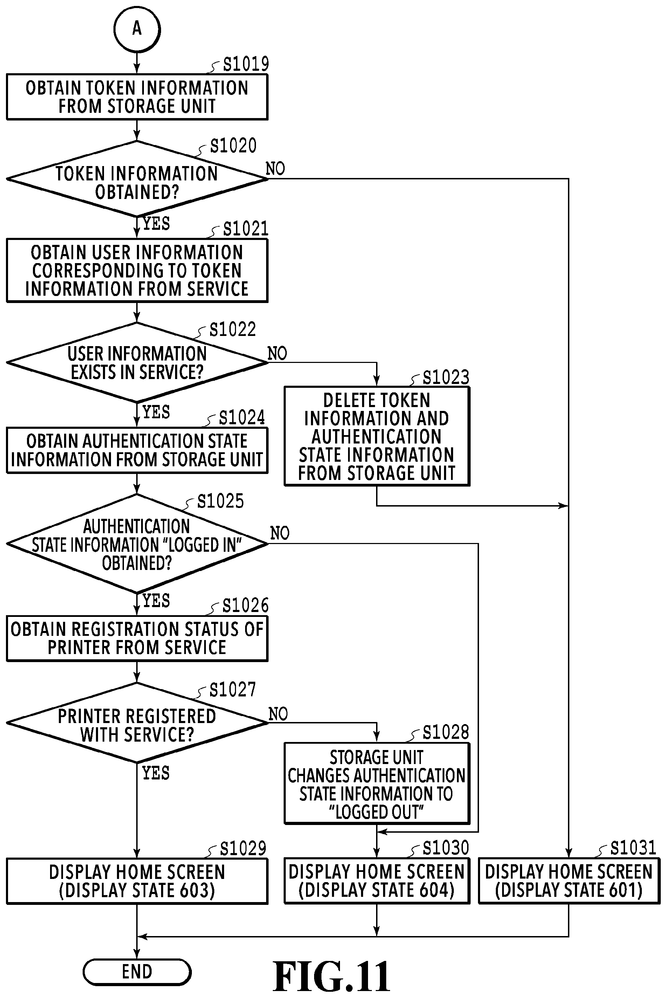

In S1002, the processor 201 checks whether the printer list obtained in S1001 contains one or more elements. If the list is empty, the processor 201 determines that no printers are registered with the application 300 and proceeds to S1019 shown in Fig. 11, or otherwise proceeds to S1003.

In S1003, the processor 201 obtains token information from the storage unit 305 to check whether an account has already been created for the printer connect service 103.

In S1004, the processor 201 checks whether the token information is obtained. If the token information is not obtained, the processor 201 determines that the account for the printer connect service 103 is yet to be created, and proceeds to S1005, or otherwise proceeds to S1007.

In S1005, the processor 201 obtains compatibility status of the printer registered with the application 300, with the printer connect service 103. Specifically, for example, the processor 201 obtains compatibility information of each of the printers included in the printer list obtained in S1001 for the printer connect service 103.

In S1006, the processor 201 checks whether there is a printer in the list whose compatibility information for the printer connect service 103 is "compatible". In other words, the processor 201 checks whether a printer compatible with the printer connect service 103 is registered with the application 300. If the printer compatible with the printer connect service 103 is registered with the application 300, the processing proceeds to S1017, or otherwise proceeds to S1018.

In S1017, the processor 201 displays the second home screen 520 with the usage status display button 521 displayed in the display state 602 on the output device 207. This processing is performed if the printer compatible with the printer connect service 103 is registered with the application 300 but is not yet registered with the printer connect service upon start-up of the application 300.

In S1018, the processor 201 displays the first home screen 510 in the display state 601 not including the usage status display button 521 on the output device 207. This processing is performed if no printers compatible with the printer connect service 103 are registered with the application 300 and the printer connect service 103 is not available upon start-up of the application 300.

The processing in S1005 and S1006 is not limited to the above. The application 300 may obtain a model information list of printers compatible with the printer connect service 103 from the printer connect service 103, and make a determination by comparing the obtained model information list with the model information in the printer list of the application 300. The application 300 may also hold model information of printers compatible with the printer connect service 103. The application 300 may also send the model information to the printer connect service 103, and the printer connect service 103 may determine whether the model information received includes a printer compatible with the printer connect service 103. In this case, the application 300 obtains a determination result from the printer connect service 103, and checks whether a printer compatible with the printer connect service 103 is in the list based on the obtained determination result.

In S1007, the processor 201 sends token information to the printer connect service 103 to check whether an account corresponding to the token information exists in the printer connect service 103, and obtains user information corresponding to the token information.

In S1008, the processor 201 checks whether the user information corresponding to the token information is obtained, that is, whether the user information corresponding to the token information exists in the printer connect service 103. If it is determined that the user information corresponding to the token information does not exist in the printer connect service 103, the processing proceeds to S1009, or otherwise proceeds to S1010.

In S1009, the processor 201 deletes the token information and the authentication state information from the storage unit 305, and moves to S1005. The processing steps executed after S1005 have been described above, and thus description thereof will be omitted here. This processing flow is performed if an account is deleted from the printer connect service 103. Therefore, if S1017 or S1018 is executed via S1009, the processor 201 may further display an error screen indicating that no user information exists in the printer connect service 103.

In S1010, the processor 201 obtains authentication state information from the storage unit 305.

In S1011, the processor 201 checks the obtained authentication state information. If the obtained authentication state information indicates "logged out", the processor 201 moves to S1016.

In S1016, the processor 201 displays the fourth home screen 740 with the usage status display button 521 in the display state 604 on the output device 207. This processing flow is performed in a case where, upon start-up of the application 300, the printer is registered with the application 300, but the user is logged out using the logout button 735 displayed in the user information screen 730.

In S1011, if the obtained authentication state information is "logged in", the application 300 moves to S1012.

In S1012, the processor 201 sends the token information held in the storage unit 305 to the printer connect service 103, and obtains from the printer connect service 103 the printer registration status for the account corresponding to the sent token information. This is because, to use the printer connect service 103, the printer needs to be registered with the account of the user of the client terminal 101.

In S1013, the processor 201 determines whether or not the printer registration information is obtained and the printer is registered with the printer connect service 103. If it is determined that the printer is not registered with the printer connect service 103, the processing proceeds to S1014, or otherwise proceeds to S1015.

In S1014, the processor 201 changes the authentication state information held in the storage unit 305 to "logged out". The processing of S1016 has been described above, and thus description thereof will be omitted here. However, this processing flow is performed if no printer is registered with the printer connect service 103 upon start-up of the application 300. Therefore, upon execution of S1016, an error screen may also be displayed indicating that no printer is registered with the printer connect service 103. To use the printer connect service 103, the printer needs to be registered with the account of the user of the client terminal 101. Therefore, such a state is set where the service is not available.

In S1015, the processor 201 displays the third home screen 720 with the usage status display button 521 in the display state 603. This processing flow is performed if the registration with the printer connect service 103 is completed normally upon start-up of the application 300.

Next, description will be given of a processing flow executed if it is determined in S1002 that no printer is registered with the application 300, as shown in Fig. 11.

The processing of S1019 to S1028 shown in Fig. 11 is the same as S1003 to S1004 and S1007 to S1014 shown in Fig. 10, and thus description thereof will be omitted here.

In S1029, the processor 201 displays a registration screen 800 with the usage status display button 521 in the display state 603 on the output device 207. This processing flow is performed if the registration with the printer connect service 103 is normally completed, but no printers are registered with the application 300, upon start-up of the application 300.

In S1030, the processor 201 displays the registration screen 910 with the usage status display button 521 in the display state 604 on the output device 207. This processing flow is performed in a case where, upon start-up of the application 300, no printers are registered with the application 300 and the user is logged out of the printer connect service 103 by using the logout button 735 displayed in the user information screen 730. This processing flow is also performed in a case where, upon start-up of the application 300, no printers are registered with the application 300 nor with the printer connect service. Upon execution of the processing of S1030, an error screen indicating that no printers are registered with the printer connect service 103 may also be displayed, as in the case of executing S1016 via S1014.

In S1031, the processor 201 displays the registration screen 500 with the usage status display button 521 in the display state 601 on the output device 207. This processing flow is performed if no printers are registered with the application 300, and the printer connect service 103 is also yet to be registered, upon start-up of the application 300. Upon execution of the processing of S1031, the processor 201 may further display an error screen indicating that no user information exists in the printer connect service 103, as in the case of executing S1017 and S1018 via S1009.

Accordingly, the application 300 can properly control the display state and operation state of the usage status display button 521. This allows the user of the client terminal 101 to easily and properly recognize the registration and usage status of the user in the printer connect service 103, thus improving usability.

The various controls described above as being performed by the processor 201 may be performed by one piece of hardware, or the entire apparatus may be controlled by a plurality of pieces of hardware (for example, a plurality of processors or circuits) sharing the processing.

Although the present disclosure has been described in detail based on the preferred embodiment, the present disclosure is not limited to these specific embodiments, and various embodiments are also included in the present disclosure without departing from the scope of the present invention. Each of the embodiments described above merely shows one embodiment of the present disclosure, and the embodiments may also be combined as appropriate.

In the above-mentioned embodiment, an example of application to a client terminal that operates a printer has been described, but the present disclosure is not limited to this example, and is applicable to any apparatus including an information processing apparatus configured to operate an apparatus cooperating with a Web service and to perform registration processing with the Web service. Specifically, the printer can be replaced with any loT device such as an air conditioner, robot vacuum cleaner, home appliance remote control, lighting, digital camera, smart plug, smart speaker, smartphone, smart watch, smart lock, and water heater. The information processing apparatus can also be replaced with a personal computer, PDA, mobile phone terminal, tablet terminal, portable image viewer, digital photo frame, music player, game machine, electronic book reader, or the like. The information processing apparatus may also be an apparatus obtained by integrating an apparatus cooperating with a Web service with an apparatus configured to operate the apparatus and perform registration with the Web service, such as an image forming system including the information processing apparatus.

In the above-mentioned embodiment, one of the usage status display buttons 521 different from each other is displayed on the home screen in one of the display states 601 to 604, but the present disclosure is not limited to such a configuration. For example, three usage status display buttons displayed in the home screens in the display states 602 to 604 may be displayed in the same home screen, and only one of the three usage status display buttons corresponding to the usage status may be substantially selectable.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

The present disclosure can make it easier, in an information processing apparatus for using a communicable electronic device, to grasp the registration and usage status of the electronic device with a specific service via a network.

Various embodiments have been described in detail above but it will be understood that the present disclosure is not limited to these embodiments and encompasses all modifications, variants, alternatives and equivalents falling within the scope of the appended claims.

## Claims

1. An information processing apparatus capable of communicating with an electronic device, comprising:
a display control unit (306) configured to perform control to display a usage status of a specific service via a network by a user on a screen of software, running on the information processing apparatus, for controlling the electronic device, and to change the display of the usage status of the specific service by the user, based on compatibility information indicating a compatibility status of the electronic device with the specific service and identification information for identifying the user.

2. The information processing apparatus according to claim 1, further comprising:
a first obtaining unit (302) configured to obtain the compatibility information; and
a second obtaining unit (304) configured to obtain the identification information.

3. The information processing apparatus according to claim 1 or 2, wherein
the identification information includes specific information for permitting access to an account of the user associated with the electronic device managed in the specific service.

4. The information processing apparatus according to claim 3, wherein
if the compatibility information indicates that the electronic device is compatible with the specific service, the display control unit performs control to change a display mode of the usage status depending on whether the specific information is obtained by the second obtaining unit.

5. The information processing apparatus according to claim 3 or 4, wherein
if the compatibility information indicates that the electronic device is compatible with the specific service, the display control unit performs control to change a display mode of the usage status depending on authentication state information obtained based on the specific information, indicating whether the account is logged in.

6. The information processing apparatus according to any one of claims 3 to 5, wherein
if the compatibility information indicates that the electronic device is not compatible with the specific service, the display control unit does not perform control to display the usage status.

7. An information processing apparatus capable of communicating with an electronic device, comprising a display control unit (306) configured to perform control to:
display a usage status of a specific service via a network in a first mode, if the electronic device is compatible with the specific service and a user of the information processing apparatus is registered with and is using the specific service;
display the usage status of the specific service in a second mode, if the electronic device is compatible with the specific service and the user of the information processing apparatus is registered with and is not using the specific service; and
display the usage status of the specific service in a third mode, if the electronic device is compatible with the specific service and the user of the information processing apparatus is not registered with the specific service.

8. The information processing apparatus according to claim 7, wherein
the display control unit performs control not to display the usage status of the specific service in any of the first to third modes, if the electronic device is not compatible with the specific service.

9. The information processing apparatus according to claim 8, wherein
the display control unit performs control to:
display the usage status for an electronic device registered with the information processing apparatus;
display the usage status in one of the first to third modes, if at least one of a plurality of electronic devices registered with the information processing apparatus is compatible with the specific service; and
not display the usage status in any of the first to third modes, if none of the plurality of electronic devices registered with the information processing apparatus is compatible with the specific service.

10. The information processing apparatus according to any one of claims 7 to 9, wherein
the display control unit performs control to:
display the usage status for an electronic device registered with the information processing apparatus; and
maintain the display in the first mode or the second mode, even after the registration of the electronic device that is compatible with the specific service has been cancelled, if the usage status has been displayed in the first mode or the second mode.

11. The information processing apparatus according to any one of claims 7 to 10, wherein
the display control unit performs control to:
display the usage status for an electronic device registered with the information processing apparatus; and
display the usage status in the second mode, even after the registration of the electronic device with the specific service has been cancelled, if the usage status has been displayed in the first mode or the second mode.

12. The information processing apparatus according to any one of claims 7 to 11, wherein
the display control unit performs control to display the usage status in the third mode, if the user has been deregistered from the specific service after the usage status has been displayed in the first mode or the second mode.

13. The information processing apparatus according to any one of claims 7 to 12, wherein
the display control unit performs control to display the usage status for an electronic device registered with the information processing apparatus,
the information processing apparatus further comprising:
a determination unit configured to determine whether the electronic device registered with the information processing apparatus is compatible with the specific service, based on a list of identification information on electronic devices compatible with the specific service and identification information on the electronic device registered with the information processing apparatus.

14. The information processing apparatus according to claim 13, wherein
the determination unit is configured to obtain the list of identification information on electronic devices from one of an external apparatus, the electronic device, and a storage unit of the information processing apparatus.

15. The information processing apparatus according to any one of claims 7 to 14, wherein
the electronic device is a printer.

16. The information processing apparatus according to any one of claims 7 to 15, wherein
the specific service is a service related to delivery of a printing material used for printing.

17. The information processing apparatus according to any one of claims 7 to 14, wherein
the electronic device is one of IoT devices such as an air conditioner, water heater, robot vacuum cleaner, home appliance remote control, lighting, digital camera, smart plug, smart speaker, smartphone, smart watch, and smart lock.

18. A method for controlling an information processing apparatus capable of communicating with an electronic device, the method comprising:
displaying a usage status of a specific service via a network by a user on a screen of software, running on the information processing apparatus, for controlling the electronic device; and
changing the display of the usage status of the specific service by the user based on compatibility information indicating a compatibility status of the electronic device with the specific service and identification information for identifying the user.

19. A program for causing a computer to function as each of the units of the information processing apparatus according to any one of claims 1 to 17.

20. A computer-readable storage medium storing a program for causing a computer to function as each of the units of the information processing apparatus according to any one of claims 1 to 17.
